# EUROPEAN PATENT SPECIFICATION

(11) **EP 1 296 464 B1**
(45) Date of publication and mention of the grant of the patent: **31.10.2007**
(21) Application number: 01308075.9
(22) Date of filing: 24.09.2001
(51) Int. Cl.: H04B 7/005

(54) **Fast power control in wireless communication network**
Schnelle Sendeleistungsregelung in einem drahtlosen Kommunikationsnetz
Commande rapide de puissance dans un réseau de communication sans fil

(43) Date of publication of application: 26.03.2003
(73) Proprietor: Lucent Technologies Inc., Murray Hill, New Jersey 07974-0636 (US)
(72) Inventor: Fischer, Georg, 90419 Nurnberg, Bavaria (DE); Schodel, Markus, 90489 Nuernberg (DE)
(74) Representative: Sarup, David Alexander

(56) References cited:
- EP-A- 1 063 786
- WO-A-01/08322
- WO-A-98/45962
- US-B1- 6 188 678

## Description

The invention relates to the controlling of transmission power of a wireless communication network, and in particular to the controlling of transmission power in the downlink direction of a GSM-network.

As known by a person skilled in the art the transmission power control in wireless communication networks, and in particular in GSM-(Global System for Mobile communication) networks is one of the main issues. By reducing the power of a transmitter, such as for example of a base station in a wireless network, the interference in the network is reduced. Based on a reduced interference also additional network capacity can be provided through certain well known techniques, such as through an increase of fractional loading. However, there are opposite requirements with power control, of which one is that a strongly reduced transmission power reduces the interference significantly resulting in highest capacity gains. On the other hand however, by reducing the transmission power, the radio link quality becomes more and more degraded and more and more sensitive to fading. Accordingly there is a need to precisely set the transmission power setting such to balance between those opposite requirements.

Consequently, by providing a careful control of the transmission power, a lower interference in the network and thus more capacity in a given spectrum can be ensured, wherein capacity in a given spectrum is quantified through a metric called spectral efficiency.

In particular for network operators having a small spectrum (less or equal 5MHz), which is typically the case for the United States, any technique which enhances spectral efficiency is appreciated.

As mentioned above, one of the main problems with regard to the power control is to overcome the fading effects. If the power control is too slow, then the power control cannot follow or compensate varying fading effects resulting in that the power has to be increased to include some margin for robustness against fading. This margin however can be reduced if the power control is fast enough to follow or compensate varying fading conditions.

As known by a person skilled in the art today a slow power control is used which updates the transmitter power slower than the mobile radio channel varies. For example, in GSM the slow power control is performed every 480ms, whereas the mobile radio channel varies with a speed of around 100ms. With fast power control, it becomes possible to update the transmitter's power setting much more often, with updates for example in the order of every 80...120ms, which is roughly 5 to 4 times more often than this slow power control.

However for implementing fast power control usually there must be a signaling channel where a power command can be posted in very short periods such as every 120ms for example. Furthermore, there must be a detector which detects the actual radio conditions precisely although the detector can analyze only a short period of time in which the radio link is operating. In general, the short periods between the updates of the power commands are critical as signaling has to be exchanged very often and stable decisions on how to change the power settings have to be made although the radio channel has been analyzed for a short time.

Moreover, according to the current understanding in the mobile communication business area, the fast power control usually is implemented by means of an addition to the respective standards. The standard body ETSI (European Telecommunication Standardization Institution) is currently working on standardizing Fast Power Control as part of an upcoming release. Likely, such standardized fast power control will go into the release 5 (REL 5) which means release 2001. However, such a standardized fast power control mechanism only works with those user equipments, such as mobile stations which are compliant to the specific network release. Consequently, since there is already a huge amount of existing mobile stations, the capacity benefits of fast power control cannot be obtained.

Additionally, in particular the US market is evolving now and operators are subsidizing the first mobile stations. Also the US customers envision a very quick conversion of TDMA (Time Division Multiple Access) users to GSM. Thus it can be expected, that during the time the ETSI is working the standard for fast power control, there will already be a huge amount of mobile stations given to subscribers. All those mobile stations cannot be converted to use fast power control based on the ETSI solution. Furthermore due to the coexistence of TDMA and GSM in the US there is only a very small spectrum available for GSM deployment. As the spectrum is so small it is critical to obtain highest spectral efficiency already when the network starts. However the operators cannot wait until the ETSI finalizes the standard and the mobile vendors come up with mobile stations supporting this standard addition.

An object of the present invention is therefore to provide with regard to the above discussed state of the art a new and improved approach, in particular for enhancing the spectral efficiency, by realizing a controlling of certain transmission power substantially independent of any upcoming addition to a standard relating to wireless communication networks to avoid the aforementioned problems due to standardization and to ensure a fast transmission power control that is immediately available and compatible to already existing mobile stations.

United States patent US-B-6188678, published European Patent Application EP-A-1063786, and International (P.C.T.) Patent Publication WO 98/45962 are referred to as background. It is known from the above mentioned US-B-6188678 to provide a method for controlling the transmission power of a wireless communication network, in particular of a GSM network, the method comprising the steps of
- receiving at a base station an uplink signal transmitted by a user equipment,
- detecting at least one kind of information parameter from said uplink signal during definable time periods,
- comparing the information of the information parameters detected during a respective time period with each other, and
- periodically adjusting the downlink transmission power between said base station and said user equipment in dependence on the information comparison for providing a fast power control loop between said base station and said user equipment (MS, 1) to reduce varying fading effects.

The present invention is characterised over the disclosure of US-B-6188678 in that in case of applying uplink discontinuous transmission functionality an averaging over a definable number of received silent descriptor frames in uplink is performed.

Accordingly, the invention proposes for the controlling of the transmission power the steps of receiving at a base station an uplink signal transmitted by a user equipment, detecting at least one kind of information parameter from said uplink signal during definable time periods, comparing the information parameters detected during a respective time period with each other and periodically adjusting the downlink transmission power between said base station and said user equipment in dependence on the comparison for providing a fast power control loop between said base station and said user equipment to reduce varying fading effects.

Thus based on the fact that decisions on how the base station transmission power should be changed are derived from the uplink the inventive fast power control approach is adapted also to work with already existing user equipments, such as mobile stations since a standard has not be altered but pre-given mechanisms of the network can be used. Moreover the feature can be implemented immediately and the gains show up immediately, too. In contrast to the ETSI solution, the operators do not have to wait for any fast power control standard to be finalized and stable and additionally do not have to wait additional time for user equipments becoming available on the market. Moreover the inventive feature can be implemented without the need for undue hardware changes and can be done remotely, in particular via loading new operating software into the base station, so that no site visits are necessary to implement the feature.

Since the uplink direction is much more interference robust than the downlink direction, especially if optional features like interference cancellation are implemented at the receiver of the base station the today's networks are rather limited by the interference in the downlink and thus the inventive fast power control approach is sufficient as it reduces down link interference.

The inventive wireless communication network adapted to perform such fast power control functionality preferably comprises a base station incorporating means for providing the fast power control functionality. As a result thereof any delay introduced by the connection line from the base station to the associated base station controller is avoided and the invention can thus be implemented as a feature which only effects the base station, whereas the ETSI standard would effect both the BTS and the base station controller. Consequently the invention significantly reduces the complexity. Moreover, based on the implementation in the base station, the inventive approach can be overlaid with the classical slow power control implemented in the base station controller.

According to a preferred embodiment the invention proposes to alter the downlink transmission power merely in dependence on relative changes in the information of the detected information parameters. Thus, the absolute information content is not considered for the inventive approach. Preferably the altering of the downlink transmission power is performed in definable power level steps to comply with specific standardized limitations, such as the GSM spec 05.08 allowing to change the power level maximal 2dB within 120ms.

Moreover, according to a very preferred refinement it is proposed to detect the receive strength of the uplink signal as information parameter for simply altering the downlink transmission power in inverse proportion to the gradient of compared receive strengths.

For optimizing the reciprocal behavior of the uplink and downlink directions it is further proposed to reduce frequency selective fading effects by averaging the general conditions over several frequencies preferably by applying an advanced frequency hopping technique such as the so-called fractional loading.

In addition or as an alternative it is proposed to provide at least at the base station a receive diversity functionality for significantly reducing the effects of Rayleigh fading, i.e. the frequency selective fading. Moreover, such a receive diversity functionality avoids that a drop in the strength of the receive uplink signal would be misinterpreted as a drop of signal strength due to shadow fading.

In case of applying uplink discontinuous transmission functionality the invention proposes to average over a definable number of received so-called silent descriptor frames in uplink, in particular over three silent descriptor frames to obtain stabilized average values with less spread.

Moreover, in the case of using adaptive multi-rate codec functionality it is proposed to detect an uplink report signal comprising information of the respective used and/or usable codec rate for altering the downlink power in inverse proportion to usable codec rates. Advantageously by implementing the inventive approach for providing fast power control based on such user equipment codec recommendation, a significant benefit is provided in that the real conditions present in the downlink are considered.

Accordingly, the inventive approach is substantially based on the assumption that uplink and downlink are reciprocal at least after frequency selective effects have been taken out.

Subsequently, the invention is exemplary described in more detail based on preferred embodiments and with regard to the accompanied drawings, in which:
- Fig. 1: is schematically depicting the preferred location of the inventive fast power control functionality, and
- Fig. 2: is schematically depicting a preferred overlaying of an inventive fast power control loop with a classical slow power control loop.

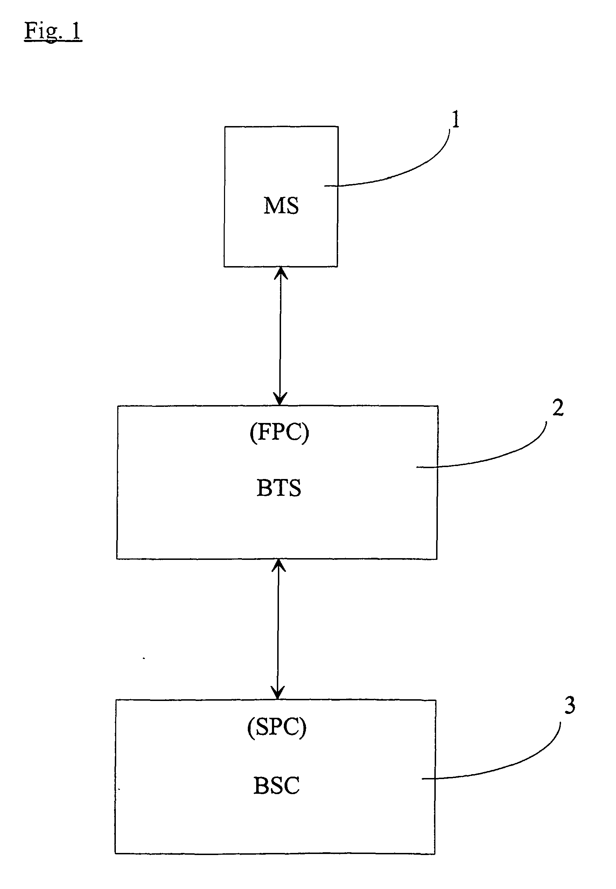

Regarding firstly Fig. 1, a user equipment 1, such as a mobile station MS is in radio connection with a network transceiver unit 2, such as a base station BTS, which in turn is in connection with an associated network controller 3, such as an base station controller BSC via a so-called Abis line.

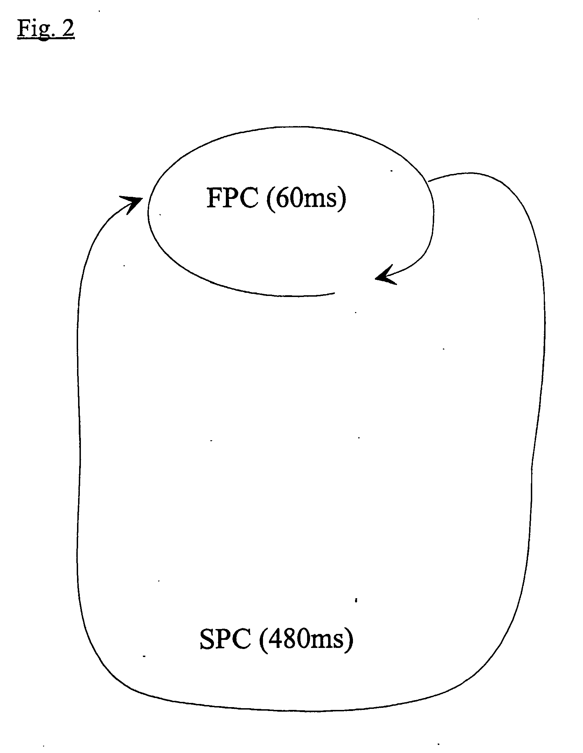

According to the invention the downlink transmission power, i.e. according to Fig. 1 the transmission power of the BTS 2 for transmitting a signal to the MS 1 is controlled such that it can be changed quickly in very short update intervals, for example in the region of 60-120ms. Accordingly this is roughly 5 to 4 times quicker than a classical slow power control would do. As can be seen from Fig. 2 a classical slow power control (SPC) loop usually is updated every 480ms. For ensuring such short update intervals the downlink transmit power of the BTS 2 is changed based on decisions derived from received uplink signals, i.e. the radio signal generated from MS 1 and received by the BTS 2.

According to the depicted but exemplar embodiment the receiver unit at the BTS 2 is regarding how the receive level of the uplink signal, i.e. at the BTS 2 is changing and steers the downlink transmit power of the BTS 2 in the opposite direction.

As an example, if the receiver at the BTS 2 observes a drop of the receive signal strength by 5dB, e.g. if the subscriber, i.e. the user equipment 1 might go around a street corner, then the transmitter of the BTS 2 is transmitting a subsequent downlink signal to the user equipment 1 with a transmit power level increased by 5 dB.

Consequently it is assumed that the pathloss in uplink and the pathloss in downlink substantially behave the same way. If the uplink signal strength gets 5dB worse then it is assumed that the downlink signal strength also gets 5dB worse.

Preferably the transmit power in the downlink, thus the transmit power of the network transceiver unit 2 is only altered according to relative changes of the receive strength at the network transceiver unit 2. The absolute receive strength at the receiver of the network transceiver unit 2 need not be considered. Thus according to the preferred fast power control approach the receiver of the BTS 2 is only looking at the gradient of the receive level and the transmitter of the BTS 2 applies the same but inverse gradient also to the transmit level of the BTS 2. The absolute levels on a more long-term average basis may be additionally controlled by any slow power control algorithm, preferably overlaying the fast power control loop, as depicted in Fig. 2. As discussed above, the means for performing the fast power control loop is preferably located at the BTS 2 and the means for controlling the slow power control functionality resides in the controller unit 3, as can be seen from Fig. 1. The reason therefore is that any delay introduced by the connection line between the network transceiver unit 2 and the network controller unit 3, such as the Abis line from the BTS 2 to the BSC 3 is then avoided. Otherwise, the delay introduced by one time passing the Abis line is in the order of 20/40 ms. This time however would have to be applied twice as the processing delay for a fast power control loop, since a respective power command has to be transmitted back from the BSC 3 to the BTS 2. As a consequence, if the means for providing fast power control would be put in the BSC 3 this would then result in the delay in the order of 40 to 80ms. Such a processing delay however, is in the same range as the update speed of the inventive fast power control which is intended and preferably adapted to be around 60 to 120ms.

The assumed reciprocal behavior of the uplink and downlink cannel paths, as described above is significantly improved for the case that there is only shadow fading also called non-frequency selective fading or slow fading. For example, if a user of a user equipment 1 radio linked to a network turns around a street corner then it can be assumed that the attenuation of the frequencies used in uplink direction is around the same as for the downlink direction. Thus, non-frequency selective fading based on the underlying example means that the duplex shift between the uplink frequency band and the downlink frequency band substantially has no impact.

If on the other hand Rayleigh fading, also called fast fading or frequency selective fading, is considered the duplex shift of course has an impact. Based thereon it is obvious for a person skilled in the art that the effects of Rayleigh fading should be avoided or reduced as far as possible to significantly improve the inventive fast power control approach.

For the downlink and for the uplink the frequency selective effects are preferably canceled by averaging the channel conditions over several frequencies through an advanced frequency hopping technique, such as the so-called fractional loading. With a frequency plan according to such fractional loading the number of frequencies over which frequency hopping is performed is much greater than the number of transceivers (TRX) in the respective cell. With frequency hopping a strong correlation can be assumed with frequency jumps of less than 1 MHz. If frequency hopping is performed over more than 1 MHz then the frequency selective effects are averaged out, in substantial. For example if a big operator implements a frequency hopping over 3.6 MHz the assumption that frequency selective effects are averaged out is true.

Moreover, it is proposed to implement at least at the receiver of the BTS 2 a receive diversity. With regard to the uplink direction the uplink signal received from one antenna of the BTS 2 may be very weak. Usually, then the other antenna of the receiver of the BTS 2 will have a strong signal. Consequently this avoids that a drop in receive uplink signal strength is misinterpreted as a drop of signal strength due to shadow fading.

Since the decisions on how to alter the transmission power of the BTS 2 for the downlink direction and thus the variations of the transmission power of the BTS 2 are based on uplink observations, any interruption of the uplink may cause problems as the changes of the radio link conditions cannot be observed. This is the case for example when using uplink discontinuous transmission (DTX). If the transmit power of the BTS 2 would remain unchanged during speech pauses in the uplink and merely any transmission of comfort noise in the uplink, such as the so called silent descriptor (SID) transmitted in the order of every 480ms, is used as information parameter to be detected, then the fast power control loop would be as fast as the classical slow power control loop. Thus, one main problem with uplink discontinuous transmission is that there is only a small statistical base over which the link quality can be analyzed for providing the inventive fast power control loop.

On the one hand, such an uplink discontinuous transmission functionality may be switched off when using the inventive fast power control loop. This however results in a shorter battery life of the respective user equipment.

Therefore, it is proposed when using uplink discontinuous functionality also to provide adaptive multirate codec (AMR), since there is a rule with uplink discontinuous transmission to transport comfort noise at least every 8 speech frames equal to 160 ms. The comfort noise is transported through so called STD (Silent descritor frames), which is spread over 20 ms. As the duration of the SID-frame (20ms) is very short, it is difficult to derive stable measures. It is therefore proposed to average over multiple SID-frames to stabilize the measures and avoid a great spread

Even there are certain limitations in deriving conclusions for the downlink direction by observing the uplink direction, in the context of AMR problems caused by such limitations can be overcome, again without introducing new signaling protocols. There is already an uplink channel in AMR which carries a message about downlink quality every 40 ms. With an uplink discontinuous transmission, the same rule as above applies to speech pauses and the mobile must report on downlink quality at least every 8 bursts thus every 160 ms.

Accordingly, by using such uplink channel in AMR which carries a message about downlink quality, the mobile reports on the downlink quality in uplink direction through an indirect way, i.e. by signaling what speech codec may be used in the downlink direction. In particular, if the mobile always reports that a higher codec with less protection may be used in the downlink, the inventive fast power control loop preferably reacts in lowering the power. On the other hand, if the mobile reports that a more robust codec should be used in downlink, then the downlink transmission power of the BTS is preferably increased.

Consequently the means for performing the fast power control loop can be implemented in a way more or less to fix the codec used in the downlink to for example AMR 5.9, which is one of the more robust codecs. Based thereon, if the operator enables a codec set of AMR 4.75, AMR 5.9, AMR 7.9 and/or AMR 12.2 the recommendation by the user equipment what codec may be used can be mapped into a change of the downlink transmission power of the BTS. In this regard, it further should be mentioned, that the thresholds, such as the carrier to interference (C/I) numbers, on what codec is best to use for what actual channel behavior, e.g. actual carrier to interference (C/I), can be downloaded into the receiver of the user equipment from the network or communication system. Accordingly the operator has the freedom to also set clever switching and thus decision thresholds.

The implementation on the inventive fast power control loop based on the codec recommendation of a user equipment has furthermore the strong benefit that the real conditions present in the downlink are considered, whereas for fullrate and enhanced fullrate conclusions for the downlink are derived in an indirect way from observing the uplink.

Thus the inventive control of downlink transmission power by the use of a fast power control loop generally independent of a given or future standard can be implemented within a BTS based on decisions using in general a reciprocal behavior of the uplink and downlink channels and/or based on decisions using an uplink information which can be mapped into a downlink transmission adjustment.

As a consequence, the invention provides a very attractive way for providing fast power control to enhance in the end spectral efficiency for network operators even with existing mobile stations or legacy terminals. Even if fast power control is just one of several techniques to enhance spectral efficiency it has the potential to be implemented in a network without undue need of hardware changes as described above, but simply by implementing a respective software product adapted to the specific network constrains. Other techniques such as adaptive arrays or macro-diversity mandate an intensive hardware and are therefore of much lower interest.

In this regard it has to be mentioned that the GSM spec 05.08 contains a certain limitation in that the transmission power of either the user equipment 1 or the BTS 2 is allowed to change maximal 2dB within 120 ms. Even this rule is likely to be relaxed during the standardization of the ETSI way of fast power control, it can be applied immediately to the proposed inventive fast power control approach.

Accordingly, even if a standardized fast power control approach according to the ETSI also includes an uplink fast power control, such standardization causes a significantly higher complexity and shortcomings as discussed in the introduction portion, in particular in the area of late availability and the need for new mobile stations.

## Claims

1. Method for controlling the transmission power of a wireless communication network, in particular of a GSM network, the method comprising the steps of
- receiving at a base station (BTS, 2) an uplink signal transmitted by a user equipment (MS, 1)
- detecting at least one kind of information parameter from said uplink signal during definable time periods,
- comparing the information of the information parameters detected during a respective time period with each other, and
- periodically adjusting the downlink transmission power between said base station (BTS, 2) and said user equipment (MS, 1) in dependence on the information comparison for providing a fast power control loop between said base station (BTS, 2) and said user equipment (MS, 1) to reduce varying fading effects **characterized in that** in case of applying uplink discontinuous transmission functionality an averaging over a definable number of received silent descriptor frames in uplink is performed.

2. Method of claim 1, wherein depending on relative changes in the information of the detected information parameters the downlink transmission power is altered, in particular by definable power level steps.

3. Method of any of the preceding claims, wherein frequency selective fading effects are reduced by averaging the channel conditions over several frequencies.

4. Method of any of the preceding claims, wherein receive diversity functionality at least at the base station (BTS, 2) is provided.

5. Method of any of any of the preceding claims, wherein in case of using adaptive multirate codec functionality an uplink report signal comprising information of the respective used and/or usable codec rate is detected for altering the downlink power in inverse proportion to usable codec rates.

## Patentansprüche

1. Verfahren zum Regeln der Sendeleistung eines drahtlosen Kommunikationsnetzes, insbesondere eines GSM-Netzes, mit folgenden Schritten:
- Empfangen an einer Basisstation (BTS, 2) eines durch ein Benutzergerät (MS, 1) übertragenen Aufwärtssignals,
- Erkennen mindestens einer Art von Informationsparameter aus dem Aufwärtssignal während definierbarer Zeitperioden,
- Vergleichen der Informationen der während einer jeweiligen Zeitperiode erkannten Informationsparameter miteinander und
- periodisches Einstellen der Abwärts-Sendeleistung zwischen der Basisstation (BTS, 2) und dem Benutzergerät (MS, 1) in Abhängigkeit von dem Informationsvergleich zur Bereitstellung einer schnellen Leistungsregelschleife zwischen der Basisstation (BTS, 2) und dem Benutzergerät (MS, 1) zum Verringern veränderlicher Schwindeffekte, **dadurch gekennzeichnet, daß** im Fall des Anwendens einer diskontinuierlichen Übertragungsfunktionalität auf der Aufwärtsstrecke eine Mittelung über eine definierbare Anzahl empfangener stiller Deskriptorrahmen auf der Aufwärtsstrecke durchgeführt wird.

2. Verfahren nach Anspruch 1, wobei in Abhängigkeit von relativen Änderungen der Informationen der erkannten Informationsparameter die Abwärts-Sendeleistung geändert wird, insbesondere um definierbare Leistungspegelschritte.

3. Verfahren nach einem der vorhergehenden Ansprüche, wobei frequenzselektive Schwundeffekte durch Mittelung der Kanalzustände über mehrere Frequenzen verringert werden.

4. Verfahren nach einem der vorhergehenden Ansprüche, wobei Empfangs-Diversity-Funktionalität zumindest an der Basisstation (BTS, 2) bereitgestellt wird.

5. Verfahren nach einem der vorhergehenden Ansprüche, wobei im Fall der Verwendung adaptiver Multiraten-Codec-Funktionalität ein Aufwärts-Meldungssignal mit Informationen der jeweiligen benutzten und/oder nutzbaren Codec-Rate zum Ändern der Ablaßleistung im umgekehrten Verhältnis zu nutzbaren Codec-Raten erkannt werden.

## Revendications

1. Procédé de commande de la puissance d'émission d'un réseau de communication sans fil, en particulier d'un réseau GSM, le procédé comprenant les étapes de :
- réception au niveau d'une station de base (BTS, 2) d'un signal de liaison montante émis par un équipement d'abonné (MS, 1),
- détection d'au moins un type de paramètre d'information à partir dudit signal de liaison montante durant des périodes de temps définissables,
- comparaison des informations des paramètres d'information détectés durant une période de temps respective les unes avec les autres, et
- réglage périodique de la puissance d'émission de liaison descendante entre ladite station de base (BTS, 2) et ledit équipement d'utilisateur (MS, 1) en fonction de la comparaison des informations pour fournir une boucle de commande rapide de puissance entre ladite station de base (BTS, 2) et ledit équipement d'abonné (MS, 1) afin de réduire des effets d'évanouissement variables, **caractérisé en ce que** dans le cas de l'application d'une fonctionnalité d'émission discontinue sur liaison montante un moyennage sur un nombre définissable de trames de description silencieuses reçues dans la liaison montante est effectué.

2. Procédé selon la revendication 1, dans lequel en fonction des changements relatifs des informations des paramètres d'information détectés la puissance d'émission de liaison descendante est modifiée, en particulier par des pas de niveau de puissance définissables.

3. Procédé selon l'une quelconque des revendications précédentes, dans lequel des effets d'évanouissement sélectifs en fréquence sont réduits en moyennant les conditions de canal sur plusieurs fréquences.

4. Procédé selon l'une quelconque des revendications précédentes, dans lequel est fournie une fonctionnalité de diversité de réception au moins au niveau de la station de base (BTS, 2).

5. Procédé selon l'une quelconque des revendications précédentes, dans lequel en cas d'utilisation d'une fonctionnalité de codec adaptatif à taux multiples un signal de rapport de liaison montante comprenant des informations du taux de codec utilisé et/ou utilisable respectif est détecté pour modifier la puissance de liaison descendante de façon inversement proportionnelle aux taux de codec utilisables.
